# EUROPÄISCHE PATENTSCHRIFT

(11) **EP 2 898 197 B1**
(45) Veröffentlichungstag und Bekanntmachung des Hinweises auf die Patenterteilung: **23.11.2016**
(21) Anmeldenummer: 13750861.0
(22) Anmeldetag: 09.08.2013
(51) Int. Cl.: F01N 3/20

(54) **VERFAHREN ZUM BETRIEB EINER DOSIERVORRICHTUNG**
METHOD FOR OPERATING A METERING DEVICE
PROCÉDÉ DE FONCTIONNEMENT D'UN DISPOSITIF DE DOSAGE

(30) Priorität: 14.08.2012 DE 102012107430
(43) Veröffentlichungstag der Anmeldung: 29.07.2015
(73) Patentinhaber: Continental Automotive GmbH, 30165 Hannover (DE)
(72) Erfinder: HODGSON, Jan, 53840 Troisdorf (DE); BAUER, Peter, 53721 Siegburg (DE); SCHEPERS, Sven, 53844 Troisdorf (DE)
(86) Internationale Anmeldenummer: PCT/EP2013/066670
(87) Internationale Veröffentlichungsnummer: WO 2014/026912

(56) Entgegenhaltungen:
- WO-A1-2011/120839
- DE-A1-102009 056 181
- US-A1- 2011 083 424

## Beschreibung

Die Erfindung betrifft ein Verfahren zum Betrieb einer Dosiervorrichtung für ein flüssiges Additiv. Eine Dosiervorrichtung für ein flüssiges Additiv wird beispielsweise im Kraftfahrzeugbereich eingesetzt, um ein flüssiges Additiv in die Abgasbehandlungsvorrichtung einer Verbrennungskraftmaschine zuzuführen.

Abgasbehandlungsvorrichtungen, denen ein flüssiges Additiv zugeführt wird, sind im Kraftfahrzeugbereich weit verbreitet. In derartigen Abgasbehandlungsvorrichtungen wird beispielsweise das Verfahren der selektiven katalytischen Reduktion (SCR-Verfahren, SCR = Selective Catalytic Reduction) durchgeführt. Bei diesem Verfahren werden Stickstoffoxidbestandteile im Abgas der Verbrennungskraftmaschine unter Zuhilfenahme eines Reduktionsmittels zu unschädlichen Substanzen wie Stickstoff, Wasser und Kohlendioxid reduziert. Als Reduktionsmittel wird hierfür regelmäßig Ammoniak verwendet. Ammoniak wird in Kraftfahrzeugen oft nicht direkt bevorratet, sondern in Form einer Reduktionsmittelvorläuferlösung. Eine besonders häufig eingesetzte Reduktionsmittelvorläuferlösung zu diesem Zweck ist Harnstoff-Wasser-Lösung. Eine 32,5 %ige Harnstoff-Wasser-Lösung ist z. B. unter dem Handelsnamen AdBlue^{®} erhältlich. Diese Reduktionsmittelvorläuferlösung kann als flüssiges Additiv mit einer Dosiervorrichtung aus einem Tank bereitgestellt werden und anschließend abgasintern innerhalb der Abgasbehandlungsvorrichtung und/oder abgasextern in einem eigens dafür vorgesehenen Reaktor zu Ammoniak umgesetzt werden. Nachfolgend werden mit dem Begriff "Additiv" insbesondere solche Reduktionsmittel bzw. Reduktionsmittelvorläufer umfasst.

Für den erfolgreichen Betrieb einer Abgasbehandlungsvorrichtung ist es gewünscht, dass das flüssige Additiv zuverlässig und genau von der Dosiervorrichtung dosiert bereitgestellt wird. Insbesondere ist eine genau portionierte, bedarfsgerechte Dosierung gewünscht. Gleichzeitig sollte eine Dosiervorrichtung für ein flüssiges Additiv möglichst kostengünstig sein. Es sollten möglichst wenige und möglichst einfache Bauteile (beispielsweise Pumpen, Ventile und Sensoren) zum Erreichen der genauen und zuverlässigen Dosierung in der Dosiervorrichtung vorgesehen sein.

Ein beim Betrieb von Dosiervorrichtungen für flüssige Additive regelmäßig auftretendes Problem sind Luftblasen in der Dosiervorrichtung. Durch Luftblasen in der Dosiervorrichtung wird einerseits die Menge des von der Dosiervorrichtung geförderten flüssigen Additivs verändert, so dass eine genaue Dosierung nicht erfolgen kann, wenn das flüssige Additiv in der Dosiervorrichtung Luftblasen enthält. Andererseits kann durch Luftblasen die Förderung auch insgesamt behindert oder sogar verhindert werden, insbesondere wenn die Pumpe zur Förderung des flüssigen Additivs nicht in der Lage ist, Luft in gleicher oder vergleichbarer Weise wie flüssiges Additiv zu fördern. Dies ist insbesondere bei kostengünstigen Pumpen der Fall, welche aus Kostengründen in Dosiervorrichtungen für flüssiges Additiv bevorzugt eingesetzt werden.

Die DE 10 2009 056 181 A1 offenbart ein Verfahren zum Betrieb einer Fördervorrichtung für ein Reduktionsmittel. Zu einem vorgegebenen Zeitpunkt wird eine Entlüftungsprozedur durchgeführt, die folgende Schritte aufweist: Bestimmen einer ist-Steigung einer Druck-Fördervolumen-Kennlinie in der Fördervorrichtung; Berechnen eines Luftblasenvolumens durch Vergleich der bestimmten Steigung mit einer Soll-Steigung; und Fördern eines Fördervolumens durch den Injektor.

Die WO 2011/120839 A1 betrifft ein Verfahren zum Betrieb einer Fördereinheit für Rduktionsmittel, wobei die Fördereinheit eine Hinlaufleitung und eine Rücklaufleitung aufweist, wobei die Rücklaufleitung ein elektrisch ansteuerbares Ventil aufweist, welches mit einem vorgegebenem Stromprofil betrieben wird.

Hiervon ausgehend ist es Aufgabe der hier vorliegenden Erfindung, die geschilderten technischen Probleme zu lösen bzw. zumindest zu lindern. Es soll insbesondere ein Verfahren zum Betrieb einer Dosiervorrichtung für ein flüssiges Additiv beschrieben werden, welches eine besonders hohe Dosiergenauigkeit und eine besonders hohe Zuverlässigkeit auch bei kostengünstig hergestellten Dosiervorrichtungen ermöglicht.

Diese Aufgaben werden gelöst mit einem Verfahren gemäß den Merkmalen des Patentanspruchs 1. Weitere vorteilhafte Ausgestaltungen des Verfahrens sind in den abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Somit wird hier ein Verfahren zum Betrieb einer Dosiervorrichtung für ein flüssiges Additiv vorgeschlagen mit zumindest einer Pumpe mit einem beweglichen Pumpenelement, welches zur Förderung des flüssigen Additivs Förderbewegungen ausführt, und mit zumindest einem Injektor, der mit einer Druckleitung an eine Druckseite der Pumpe angeschlossen ist und zur Dosierung des flüssigen Additivs geöffnet werden kann, wobei das Verfahren zumindest folgende Schritte umfasst:
a) Öffnen des Injektors;
b) Dosieren von flüssigem Additiv und Zählen der Förderbewegungen während des Dosierens;
c) Schließen des Injektors; und
d) Vergleichen der Anzahl der Förderbewegungen, die in Schritt b) ermittelt wurde, mit der Öffnungszeit des Injektors zwischen Schritt a) und Schritt c) zur Diagnose des Betriebs der Dosiervorrichtung.

Die Dosiervorrichtung, die mit dem beschriebenen Verfahren betrieben werden kann, ist insbesondere dazu konzipiert und eingerichtet, flüssiges Additiv (insbesondere Harnstoff-Wasser-Lösung) aus einem Tank zu entnehmen und in eine Abgasbehandlungsvorrichtung in vorbestimmten Portionen zuzugeben. Die Pumpe der Dosiervorrichtung weist vorzugsweise eine Saugseite und eine Druckseite auf. Zum Ansaugen des flüssigen Additivs aus dem Tank ist die Saugseite der Pumpe über eine Saugleitung an den Tank angeschlossen. Durch die Saugleitung kann flüssiges Additiv angesaugt werden. An der Druckseite der Pumpe ist eine Druckleitung angeschlossen, welche zu einem Injektor führt. Der Injektor kann zur Steuerung der Abgabe des flüssigen Additivs dienen. Der Injektor kann unmittelbar an einer Abgasbehandlungsvorrichtung angeordnet sein. Es ist auch möglich, dass zwischen dem Injektor und einer Abgasbehandlungsvorrichtung noch ein weiteres (abgasexternes) Leitungsstück angeordnet ist, so dass der Injektor beabstandet von der Abgasbehandlungsvorrichtung angeordnet sein kann. Die Zugabe des von dem Injektor dosierten flüssigen Additivs in die Abgasbehandlungsvorrichtung erfolgt Vorzugsweise über eine (passive) Düse bzw. eine Eindüsstelle, welche für eine gleichmäßige Verteilung bzw. Versprühung des flüssigen Additivs in einer Abgasbehandlungsvorrichtung sorgt. Vorzugsweise befindet sich die Düse bzw. die Eindüsstelle strömungstechnisch von der Pumpe aus gesehen hinter dem Injektor bzw. zwischen dem Injektor und der Abgasbehandlungsvorrichtung.

Die Pumpe ist vorzugsweise eine pulsförmig arbeitende Pumpe, deren Pumpenelement zur Förderung als Förderbewegungen Förderhübe ausführt. Förderhübe sind typische Förderbewegungen im Sinne des beschriebenen Verfahrens. Bei der Förderbewegung (bzw. bei den Förderhüben) wird das Pumpenelement in einem Bewegungsbereich hin und her bewegt, wobei eine Pumpenkammer regelmäßig vergrößert und verkleinert wird. Während sich die Pumpenkammer verkleinert, strömt flüssiges Additiv hin zu der Druckseite der Pumpe aus der Pumpe bzw. aus der Pumpenkammer der Pumpe aus. Während sich das Pumpenkammervolumen vergrößert, strömt flüssiges Additiv ausgehend von der Saugseite der Pumpe in die Pumpe bzw. in die Pumpenkammer ein. An der Saugseite und/oder an der Druckseite der Pumpe ist vorzugsweise ein Ventil vorgesehen, welches die Richtung der Strömung des flüssigen Additivs durch die Pumpe vorgibt. Besonders bevorzugt ist, wenn die Pumpe lediglich an der Druckseite ein Ventil aufweist und an der Saugseite kein Ventil vorgesehen ist, wobei die Wirkung eines Ventils an der Saugseite durch eine geeignete Gestaltung des Strömungswegs des flüssigen Additivs durch die Pumpe hindurch erreicht wird. Eine derartige Pumpe ist besonders kostengünstig und daher für den Einsatz in einer Dosiervorrichtung besonders vorteilhaft.

Das bewegliche Pumpenelement der Pumpe kann beispielsweise als Kolben oder als Membran ausgeführt sein. Auch ist ein kombiniertes bewegliches Pumpenelement einsetzbar, welches aus einem Kolben, einer Membran und einem Übertragungsmittel besteht, das eine Bewegung des Kolbens auf die Membran überträgt. Ein derartiges Übertragungsmittel kann beispielsweise ein festes (mechanisches) Übertragungsmittel (wie ein Stößel, ein Schieber, ein Pleuel oder eine Nockenkonstruktion) oder ein flüssiges Übertragungsmittel, wie ein Übertragungsfluid sein. Ein Übertragungsfluid kann von einem Kolben verdrängt werden und so hydraulisch eine Membran bewegen. Das bewegliche Pumpenelement wird vorzugsweise von einem Antrieb angetrieben. Dieser Antrieb kann beispielsweise ein elektromagnetischer Linearantrieb sein. Diese Antriebsform ist besonders bevorzugt, weil Pumpen mit einem derartigen Antrieb besonders kostengünstig sind. Es ist allerdings auch möglich, dass ein anderer Antrieb wie beispielsweise ein Rotationsantrieb mit einem Übersetzungsmittel verwendet wird, wobei das Übersetzungsmittel die rotatorische Bewegung des Rotationsantriebs in eine lineare Bewegung des beweglichen Pumpenelements umwandelt.

Es können auch andere Pumpen verwendet werden, die zur Förderung Förderbewegungen ausführen. Für das beschriebene Verfahren ist lediglich wichtig, dass die Pumpe Förderbewegungen ausführt, die in irgendeiner Weise zählbar sind. Es kommt für das beschriebene Verfahren nicht darauf an, das die Förderung pulsartig oder pulsförmig erfolgt. Beispielsweise können vollständige Rotationsbewegungen eines Rotationsantriebs einer Pumpe ohne Weiteres gezählt werden, um das beschriebene Verfahren zu realisieren. Sowohl Verdrängerpumpen als auch Strömungspumpen können einen Antrieb aufweisen, der zur Förderung (zählbare) Rotationsbewegungen ausführt.

Vorzugsweise ist die Pumpe der Dosiervorrichtung für das beschriebene Verfahren im Verhältnis zu dem Injektor so dimensioniert, dass für einen (einzelnen) üblichen Dosiervorgang mit dem Injektor (Schritte a) bis c)) eine Mehrzahl von Förderbewegungen notwendig ist, die größer als 5, vorzugsweise größer als 10 und besonders bevorzugt größer als 20 ist.

Die Dosierung bei der Dosiervorrichtung erfolgt vorzugsweise durch ein (aktives bzw. geregeltes) Öffnen und Schließen des Injektors. Die Zeit, während der der Injektor geöffnet ist, entspricht dabei proportional der dosierten Menge an flüssigem Additiv. Dazu ist der Druck in der Druckleitung zwischen der Pumpe und dem Injektor vorzugsweise auf einen vorgegebenen Förderdruck eingestellt. Dies wird durch eine geeignete Ansteuerung bzw. Regelung der Pumpe erreicht. An der Druckleitung ist vorzugsweise ein Drucksensor vorgesehen, mit welchem eine Steuereinheit den Druck in der Druckleitung ermitteln bzw. überwachen kann. In Abhängigkeit der Information des Drucksensors steuert die Steuereinheit dann die Pumpe. Bei festgelegtem Druck des flüssigen Additivs in der Druckleitung und konstantem Öffnungsquerschnitt des geöffneten Injektors und konstanter Viskosität des flüssigen Additivs ist die dosierte Menge an flüssigem Additiv dann zu der Öffnungszeit des Injektors zwischen dem Öffnen des Injektors und dem Schließen des Injektors proportional. Wenn der Drucksensor von dem Injektor beabstandet angeordnet ist, weil zwischen dem Drucksensor und dem Injektor beispielsweise ein Leitungsabschnitt existiert, kann der von dem Drucksensor gemessene Druck gefiltert bzw. verarbeitet werden, um den Druck am Injektor für die Dosierung zu ermitteln. Die Filterung/Bearbeitung kann je nach Art des Leitungsabschnittes unterschiedlich erfolgen. Beispielsweise kann die Filterung/Bearbeitung eine Dämpfung und/oder einen zeitlichen Versatz umfassen.

Auf die beschriebene Art und Weise erfolgt in den Schritten a) bis c) des Verfahrens die Dosierung des flüssigen Additivs mit Hilfe des Injektors. Um während der Injektor in Schritt b) geöffnet ist, den Druck in der Druckleitung der Dosiervorrichtung aufrecht zu erhalten, fördert die Pumpe flüssiges Additiv in die Druckleitung und führt dazu Förderbewegungen aus. Gemäß Schritt b) wird dabei die Anzahl der Förderbewegungen ermittelt. Dabei sei darauf hingewiesen, dass auch ein für die Anzahl der Förderwege charakteristischer bzw. proportionaler Betriebsparameter der Dosiervorrichtung (und insbesondere des Antriebs der Pumpe) betrachtet werden kann. Für den Fall, dass z. B. kleine Förderbewegungen ausgeführt werden, kann für das System eine Zählung (vollständiger) Förderbewegungen (aus Genauigkeitsgründen und/oder Kostengründen) ausreichen. Kleine Förderbewegungen sind insbesondere möglich, wenn die Förderbewegungen Förderhübe sind, die von einem beweglichen Pumpenelement ausgeführt werden. Dann ist es möglich, die Pumpe im Teilhub zu betreiben. Im Teilhubbetrieb werden keine vollständigen Förderhübe (vom unteren zum oberen Totpunkt) durchgeführt. Die Bewegung des beweglichen Pumpenelementes im Teilhub kann als "kleine" Förderbewegung bezeichnet werden. Beim Zählen der Förderbewegungen können kleine Förderbewegungen entsprechend gewichtet werden. Beispielsweise können zwei kleine Förderbewegungen als eine "normale" Förderbewegung mitgezählt werden. Es ist auch möglich, kleine Förderbewegungen bei der Zählung der Förderbewegungen außer Acht zu lassen. Zusätzlich und/oder alternativ kann auch eine inkrementelle Betrachtung einer einzelnen Förderbewegung betrachtet werden, also zum Beispiel der Teilschritte des Antriebs der Pumpe während eines einzelnen Förderhubes, so dass eine noch genauere Überwachung der Bewegung des Pumpenelements erreicht wird. Ein vollständiger Förderhub einer Pumpe kann in eine Vielzahl von Abschnitte unterteilt werden, die jeweils einer bestimmten Menge an gefördertem flüssigen Additiv entsprechend und die jeweils als "Förderbewegung" im Sinne des beschriebenen Verfahrens betrachtet werden. Die vorstehenden Sachverhalte sollen im Folgenden stets gelten, wenn von der Anzahl der Förderbewegungen als Parameter ausgegangen wird.

Für den Vergleich der Anzahl der Förderbewegungen des Pumpenelements in Schritt b) mit der (tatsächlichen und/oder gemessenen) Öffnungszeit des Injektors zwischen Schritt a) und Schritt c) wird beispielsweise eine der Öffnungszeit entsprechende Dosiermenge (Vergleichsmenge oder Vergleichszahl) berechnet. Dies kann beispielsweise auch mit Hilfe der folgenden Parameter geschehen:
- dem Druck in der Druckleitung;
- der Viskosität des flüssigen Additivs;
- dem Öffnungsquerschnitts des Injektors in geöffnetem Zustand; und;
- der Öffnungszeit des Injektors zwischen Schritt a) und Schritt c).
Die Berechnung der entsprechenden Daten (Vergleichsmengen bzw. Vergleichszahlen) können teilweise vorab ermittelt bzw. berechnet werden und als konstante Umrechnungsparameter (bzw. Kennwerte oder Kennfelder) in einer Steuereinheit gespeichert und abrufbar bereitgestellt sein, um die Vergleichsmengen und/oder Vergleichszahlen im Rahmen des Verfahrens schnell und mit geringem Rechenaufwand festlegen zu können.

Außerdem wird beispielsweise eine der Anzahl der Förderbewegungen entsprechenden Fördermenge als weitere Vergleichsmenge bzw. Vergleichszahl bestimmt. Die Fördermenge lässt sich beispielsweise mit Hilfe der folgenden Parameter ermitteln:
- dem Pumpenkammervolumen;
- ein Strom und/oder eine Spannung mit der die Pumpe und/oder der Injektor betrieben werden;
- Ansteuerparameter der Pumpe, wie beispielsweise Signalverläufe bzw. Verläufe von Strom und/oder Spannung zum Betrieb der Pumpe und/oder des Injektors;
- gegebenenfalls mit der Geschwindigkeit eines beweglichen Pumpenelements während der Durchführung der Förderbewegungen;
- der Viskosität des flüssigen Additivs; und
- der Anzahl der Förderbewegungen; ermitteln.
Auch diese Daten (Vergleichsmengen bzw. Vergleichszahlen) können teilweise vorab ermittelt bzw. berechnet werden und als Kennwert bzw. Kennfeld in einer Steuereinheit gespeichert und abrufbar bereitgestellt sein.

Im Rahmen des Vergleichs werden zwei ermittelte Fördermengen (bzw. Vergleichsmengen oder Vergleichszahlen) von denen eine für die Öffnungszeit des Injektors und die andere für die durchgeführten Förderbewegungen repräsentativ ist, miteinander verglichen. Es ist nicht notwendig, dass beide Fördermengen explizit berechnet werden, sondern es ist auch möglich, dass die Fördermengen mit entsprechenden Ersatzgrößen miteinander verglichen werden. Insofern stehen die Begriffe "Vergleichsmenge" und "Vergleichszahl" auch für derartige Ersatzgrößen. Beispielsweise kann eine Vergleichsvorschrift angewendet werden, die sich ergibt, wenn beide Fördermengen gleichgesetzt werden.

Anhand der Diagnose, welche durch den Vergleich in Schritt d) durchgeführt wird, kann festgestellt werden, ob in der Dosiervorrichtung gegebenenfalls ein Verlust an flüssigem Additiv durch den Injektor, eine Fehldosierung über den Injektor und/oder ein Verlust an Förderleistung oder Förderdruck in der Pumpe auftritt. Bei dem Vergleich kann eine Abweichung zwischen den Vergleichszahlen bzw. den Vergleichsmengen festgestellt werden. Wenn in Schritt d) eine signifikante Abweichung festgestellt wurde, kann beispielsweise eine Korrektur von zumindest einem Betriebsparameter der Vorrichtung erfolgen, um den Betrieb der Dosiervorrichtung (insbesondere die Dosiergenauigkeit der Dosiervorrichtung) zu verbessern. Wenn in Schritt d) eine signifikante Abweichung festgestellt wurde, ist es auch möglich, dass ein Fehlersignal für eine On-Board-Diagnose ausgegeben wird.

Gemäß einer Ausführungsvariante des Verfahrens werden die Verfahrensschritte a) bis c) mit einer Wiederholungsanzahl wiederholt, bevor Schritt d) ausgeführt wird, wobei in Schritt d) eine Anzahl von Vergleichen durchgeführt wird, die der Wiederholungsanzahl entspricht, und wobei die Vergleiche zur Diagnose des Betriebs der Dosiervorrichtung zusammen berücksichtigt werden.

Beispielsweise können die Verfahrensschritte a) bis c) zwischen 5 und 20 Mal ausgeführt werden, bevor der Verfahrensschritt d) ausgeführt wird. Dann wird für jede Ausführung der Verfahrensschritte a) bis c) eine Injektoröffnungsdauer und eine Anzahl von erfolgten Förderbewegungen gespeichert bzw. jeweils entsprechende Vergleichsmengen oder Vergleichszahlen gespeichert. Diese Injektoröffnungsdauern und Anzahlen können dann in Schritt d) in einer gemeinsamen Betrachtung miteinander verglichen werden. Es kann so beispielsweise festgestellt werden, ob ein gleichmäßig auftretender Dosierungsfehler oder ein sich unregelmäßig widerholender Dosierungsfehler auftritt. Gegebenenfalls kann auch erkannt werden, dass ein Fehler nur kurzzeitig auftrat und deshalb keine Maßnahmen zur Korrektur eingeleitet werden müssen.

Eine Fehlfunktion kann beispielsweise erkannt werden, wenn eine unzulässige Abweichung von Vergleichsmengen oder Vergleichszahlen bei einem Mindestanteil der durchgeführten Vergleiche auftritt. Wenn eine unzulässige Abweichung beispielsweise bei mehr als 30 Prozent der Vergleiche auftritt kann ein Fehler erkannt werden.

So kann beispielsweise verhindert werden, dass die On-Board-Diagnose eines Kraftfahrzeuges eine Fehlermeldung ausgibt, wenn eigentlich kein dauerhafter Fehler, sondern lediglich eine vorübergehende Störung vorliegt.

Das beschriebene Verfahren ist bevorzugt, wenn in Schritt d) anhand der Anzahl der Förderbewegungen eine explizite (bzw. tatsächliche) Menge an flüssigem Additiv berechnet wird, die zwischen Schritt a) und Schritt c) gefördert wurde.

Eine derart ermittelte Information über die geförderte Menge kann beispielsweise verwendet werden, um die Dosiergenauigkeit des Injektors zu überprüfen. Im regulären (einwandfreien) Betrieb der Dosiervorrichtung wird die dosierte Menge anhand der Öffnungszeit des Injektors vorgegeben. Mit Hilfe der anhand der Förderbewegungen berechneten Menge kann beispielsweise eine zusätzliche Kalibrierung des Injektors erfolgen, um in einem Steuergerät eine Information über den Zusammenhang zwischen Dosiermenge und Öffnungszeit des Injektors zu aktualisieren und gegebenenfalls an Veränderungen der Dosiervorrichtung (beispielsweise aufgrund von Alterungserscheinungen der Komponenten der Dosiervorrichtung) anzupassen.

Weiterhin vorteilhaft ist das Verfahren, wenn in Schritt d) festgestellt wird, dass Luft in der Dosiervorrichtung vorliegt, wenn die Anzahl der Förderbewegungen oder ein der Anzahl entsprechender Parameter größer ist als ein erster Grenzwert.

Bevorzugt ist dabei, wenn der erste Grenzwert in Abhängigkeit der Öffnungszeit des Injektors festgelegt wird.

Der erste Grenzwert für die Anzahl der Förderbewegungen und/oder ein der Anzahl bzw. der Schritte der Förderbewegungen entsprechender Parameter (PUMPMENGE) kann anhand der durch die Öffnungszeit des Injektors vorgegebenen Dosiermenge (DOSIERMENGE) und der der Förderbewegungen normalerweise (also wenn keine Luft in der Dosiervorrichtung vorliegt) entsprechenden Fördermenge bestimmt werden. Wenn die normalerweise der Anzahl der Förderbewegungen entsprechende Fördermenge beispielsweise mehr als 10% oder mehr als 50% größer als die Dosiermenge ist, kann davon ausgegangen werden, dass Luft in der Dosiervorrichtung bzw. in der Pumpe der Dosiervorrichtung und/oder in der Druckleitung vorliegt. Dies liegt daran, dass die Pumpe in diesem Fall aufgrund der eingeschlossenen Luft nicht ihre volle Förderleistung entfalten kann, sondern bei der Durchführung der Förderbewegungen mit dem beweglichen Pumpenelement zumindest teilweise lediglich die Luft zusammendrückt, die anschließend wieder expandiert. Das Pumpenkammervolumen der Pumpe kann dann nicht voll zur Förderung von flüssigem Additiv genutzt werden. Als erster Grenzwert (1GW) kann beispielsweise ein Wert der Abweichung festgelegt sein. Damit kann der Grenzwert z. B. dem 1,5-fachen der mittels der Anzahl der Förderbewegungen bestimmten Fördermenge sein, insbesondere dem 1,3-fachen oder sogar dem 1,1-fachen dieser Fördermenge. Daraus ergibt sich - ggf. für 1GW = 1,2*PUMPMENGE - folgender Zusammenhang: Wenn DOSIERMENGE < 1GW, dann wird systembedingt Luft in der Dosiervorrichtung erkannt bzw. festgestellt. Mit dieser Vorgehensweise kann Luft in der Dosiervorrichtung erkannt werden, ohne dass zusätzliche Sensoren erforderlich sind.

Das Verfahren ist weiter vorteilhaft, wenn die Gasmenge in der Dosiervorrichtung anhand der Anzahl der Förderbewegungen bestimmt wird.

Dies kann insbesondere dadurch erfolgen, dass die der Anzahl der Förderbewegungen normalerweise (bei einwandfreiem Betrieb) entsprechende Fördermenge mit der der Öffnungszeit des Injektors entsprechenden Dosiermenge verglichen wird. Die Größe der Gasmenge ist abhängig von dem Verhältnis dieser Fördermenge an der Pumpe zu der Dosiermenge an dem Injektor. Die Gasmenge ist typischerweise eine Luftblase, die in die Dosiervorrichtung hinein gesaugt wurde. Die Größe der Luftblase bzw. die Gasmenge in der Dosiervorrichtung wird beispielsweise als zu diesem Verhältnis proportional angesehen. Es ist auch möglich, dass eine komplexere Berechnungsvorschrift (Kennfeld) verwendet wird, um aus der Anzahl der Förderbewegungenund der Öffnungszeit des Injektors eine Größe einer Luftblase bzw. eine Gasmenge zu bestimmen. In dieser Berechnungsvorschrift kann beispielsweise auch zumindest einer der folgenden Parameter zusätzlich berücksichtigt werden:
- die Viskosität des flüssigen Additivs;
- die angeforderte Dosiermenge, aus welcher sich die Öffnungszeit des Injektors ergibt;
- der Druck in der Druckleitung; und
- die Viskosität der Luftblase bzw. der Gasmenge.
Somit kann besonders einfach abgeschätzt werden, wie groß eine Luftblase bzw. eine Gasmenge in der Dosiervorrichtung (insbesondere in der Pumpe bzw. der Druckleitung der Dosiervorrichtung) ist. Diese Information kann dann berücksichtigt werden oder sogar eine Entscheidung vorgeben, welche Maßnahmen zum Entlüften/Entgasen des Systems eingeleitet werden.

Weiterhin ist das Verfahren vorteilhaft, wenn eine Entgasung der Dosiervorrichtung erfolgt, wenn Gas in der Dosiervorrichtung festgestellt wurde.

Das Gas kann dabei insbesondere Luft und/oder Dampf (des Additivs) umfassen. Durch eine Entgasung der Dosiervorrichtung kann schnell wieder die volle Förderleistung bzw. der genaue Betrieb der Dosiervorrichtung erreicht werden. Unter "Entgasen" (bzw. Entlüften) wird hierbei verstanden, dass durch einen veränderten Betrieb der Dosiervorrichtung der Anteil Gas in dem in der Dosiervorrichtung befindlichen flüssigen Additiv reduziert wird. Insbesondere wird nach der Durchführung einer Entgasungsprozedur wieder der erste Grenzwert unterschritten.

Auch vorteilhaft ist das Verfahren, wenn die Dosiervorrichtung eine Druckleitung aufweist, welche sich von der Pumpe zu dem Injektor erstreckt, und eine Rücklaufleitung, die von der Druckleitung abzweigt, wobei die Entgasung über die Rücklaufleitung erfolgt, wenn die Anzahl der Förderbewegungen größer ist als ein zweiter Grenzwert und ansonsten eine Entgasung über den Injektor erfolgt.

Es wurde bereits weiter oben erläutert, dass das Vorhandensein einer Gasmenge/Luftblase dadurch festgestellt werden kann, dass die Anzahl der Förderbewegungen größer ist als ein erster Grenzwert, welcher einer bestimmten Fördermenge entspricht. Nun wird angegeben, dass anhand eines zweiten Grenzwerts festgestellt wird, dass die Größe/Menge einer in der Dosiervorrichtung vorliegenden Gasmenge einen bestimmten Wert überschreitet. Dies ergibt sich daraus, dass anhand der Anzahl der Förderbewegungen eine tatsächlich vorliegende Gasmenge/Luftmenge bestimmt werden kann, wie ebenfalls bereits weiter oben beschrieben wurde.

Die Dosiervorrichtung für flüssiges Additiv kann nunmehr eine Rücklaufleitung aufweisen, die von der Druckleitung abzweigt und sich von der Druckleitung zurück zum Tank erstreckt. Durch eine derartige Rücklaufleitung ist eine Kreisförderung von flüssigem Additiv möglich (z. B. in einer Strömungsrichtung durch die Saugleitung, die Pumpe, die Druckleitung und die Rücklaufleitung zurück in den Tank). Durch eine derartige Kreisförderung kann Gas bzw. Luft, die in der Dosiervorrichtung vorliegt, zurück in den Tank zurückgefördert werden, ohne dass die Dosierung des flüssigen Additivs an dem Injektor verfälscht wird. Dabei ist bei einer derartigen Kreisförderung eine gleichzeitige Dosierung von flüssigem Additiv durch den Injektor gegebenenfalls nicht sinnvoll, weil der Druck in der Druckleitung während der Entgasungsprozedur abfällt, wenn ein Rücklaufventil geöffnet ist, durch welches die Kreisförderung durch die Rücklaufleitung kontrolliert wird. Das Rücklaufventil ist vorzugsweise in der Rücklaufleitung möglichst nah oder direkt hinter der Abzweigung der Rücklaufleitung von der Druckleitung angeordnet.

Alternativ zu der beschriebenen Entgasung einer Dosiervorrichtung durch eine Rücklaufleitung ist es auch möglich, das Gas bzw. die Luft durch den Injektor der Dosiervorrichtung durchzuführen. Dann wird das Gas gemeinsam mit flüssigem Additiv durch den Injektor der Dosiervorrichtung hindurch geschoben. Bei einer derartigen Entgasung muss zwar einerseits der Dosierbetrieb mit dem Injektor nicht unterbrochen werden, allerdings tritt durch die mit austretende Gasmenge, welche den Injektor passiert, eine Verfälschung der Dosiermenge auf.

Ansatz der hier beschriebenen weiteren Verbesserung des Verfahrens ist, dass diese Verfälschung bei kleinen Volumina/Mengen des Gases ggf. akzeptiert werden kann, weil sie relativ gering ist. Dann erfolgt die Entlüftung/Entgasung über den Injektor, wobei vorteilhafter Weise der reguläre Betrieb der Dosiervorrichtung nicht unterbrochen werden muss. Wenn insbesondere die Luftblase bzw. die Gasmenge eine gewisse Größe überschreitet, wäre die fehlerhafte Dosierung des flüssigen Additivs durch den Injektor (welche von der Gasmenge bzw. von der Luftblase verursacht wird) zu groß, um im Rahmen des regulären Betriebs akzeptiert werden zu können. Um möglichst schnell einen fehlerfreien Betrieb der Dosiervorrichtung herzustellen, erfolgt eine Entgasung in diesem Fall über die Rücklaufleitung.

Auch vorteilhaft ist das beschriebene Verfahren, wenn während Schritt b) eine Geschwindigkeit des beweglichen Pumpenelements ermittelt wird, und die Geschwindigkeit des beweglichen Pumpenelements in einem Schritt e) zur Bestimmung eines Drucks in der Dosiervorrichtung verwendet wird.

Vorzugsweise wird hierbei nicht die mittlere Geschwindigkeit des beweglichen Pumpenelements berechnet, welche sich einfach aus der Anzahl der Förderbewegungen und der Zeit zwischen a) und c) ergeben würde. Bevorzugt wird stattdessen eine Geschwindigkeit des beweglichen Pumpenelements ermittelt, welche sich während einer einzelnen Förderbewegung aufgrund einer Antriebskraft ergibt, die auf das bewegliche Pumpenelement wirkt. Je größer der Druck in der Druckleitung ist, umso langsamer bewegt sich das bewegliche Pumpenelement, wenn auf das bewegliche Pumpenelement eine konstante Antriebskraft ausgeübt wird. Daher kann auf die beschriebene Art und Weise über den Geschwindigkeitsverlauf des beweglichen Pumpenelements (während einer Förderbewegung) besonders einfach und kostengünstig der Druck in der Druckleitung bestimmt werden.

Wenn nach dieser Verfahrensführung der Druck in der Druckleitung bestimmt wird, ist es gegebenenfalls möglich, auf einen zusätzlichen Drucksensor an der Druckleitung zu verzichten, weil der Druck in der Druckleitung bereits innerhalb der Pumpe erkannt werden kann.

Wenn in der Dosiervorrichtung (bzw. in der Druckleitung) mit dem beschriebenen Verfahren eine Gasmenge bzw. eine Luftblase erkannt wurde, ist es bevorzugt, diese aus der Dosiervorrichtung hinaus zu transportieren. Weiter oben wurden bereits zwei verschiedene Möglichkeiten angesprochen eine eine Gasmenge bzw. eine Luftblase aus einer Dosiervorrichtung hinaus zu fördern. Gemäß einer ersten Variante ist ein Ausschieben der Gasmenge durch den Injektor in die Abgasbehandlungsvorrichtung möglich. Gemäß einer zweiten Variante kann eine Kreisförderung erfolgen, bei der Gas in der Dosiervorrichtung durch eine Rücklaufleitung zurück in den Tank für das flüssige Additiv gefördert wird.

Für die erste Variante soll hier eine besonders vorteilhafte Ausführungsform beschrieben werden. Bevorzugt ist ein Verfahren zum Entlüften/Entgasen einer Dosiervorrichtung für flüssiges Additiv mit einer Pumpe zur Förderung des flüssigen Additivs entlang einer Förderleitung aus einem Tank zu einem Injektor, zumindest aufweisend die folgenden Schritte:
w) Erkennen einer Gasmenge bzw. einer Luftblase in der Förderleitung;
x) Öffnen des Injektors;
y) Erhöhen einer Betriebsgeschwindigkeit der Pumpe; und
z) Ausstoßen der Luftblase, wobei die erhöhte Betriebsgeschwindigkeit der Pumpe den Impuls des flüssigen Additivs und der Luft in der Förderleitung erhöht..

Dieses Verfahren ist auch unabhängig von den ansonsten in dieser Anmeldung beschriebenen Konzepten anwendbar und stellt somit eine unabhängige Verbesserung gegenüber dem Stand der Technik dar. Vorzugsweise wird bei dem Verfahren, unmittelbar nachdem eine Luftblase erkannt wurde, der Injektor geöffnet und erst anschließend die Betriebsgeschwindigkeit der Pumpe erhöht. Hierdurch kann erreicht werden, dass die erhöhte Betriebsgeschwindigkeit der Pumpe vollständig dazu genutzt wird, das flüssige Additiv und die Luftblase in der Förderleitung zu beschleunigen und keine oder nur eine geringe Druckerhöhung in der Förderleitung auftritt. Der spezifische Impuls des flüssigen Additivs und der Luftblase werden so maximiert. Vorzugsweise wird die Betriebsgeschwindigkeit der Pumpe in Schritt y) auf eine Betriebsgeschwindigkeit erhöht die maximal 10 Prozent unterhalb der maximalen Betriebsgeschwindigkeit der Pumpe liegt. Durch eine derartige Verfahrensführung können das flüssige Additiv und die Luftblase in der Förderleitung derart beschleunigt werden, dass rückhaltende Kräfte auf die Luftblase in der Fördereinheit durch den spezifischen Impuls überwunden werden. Rückhaltende Kräfte können beispielsweise Kapillarkräfte sein, die an der Grenzfläche zwischen dem flüssigen Additiv und der Luftblase wirken und die Luftblase in der Förderleitung halten. Die Luftblase kann durch den spezifischen Impuls gewissermaßen aus der Förderleitung heraus gerissen werden.

Weiterhin wird hier eine Dosiervorrichtung zur Förderung eines flüssigen Additivs aus einem Tank in eine Abgasbehandlungsvorrichtung vorgeschlagen, aufweisend zumindest eine Pumpe mit einem beweglichen Pumpenelement, welches zur Förderung des flüssigen Additivs Förderbewegungen ausführt, und zumindest einen Injektor, der mit einer Druckleitung an eine Druckseite der Pumpe angeschlossen ist und der zur Dosierung des flüssigen Additivs geöffnet werden kann, sowie ein Steuergerät, welches zur Durchführung des beschriebenen Verfahrens eingerichtet ist. Hierfür ist das Steuergerät insbesondere mit entsprechenden Speicherbauteilen, Rechenbauteilen und Datenleitungen ausgeführt, wobei insbesondere Datenleitungen (mittelbar/unmittelbar) hin zur Pumpe, dem Injektor und ggf. einem Drucksensor vorgesehen sind. Die Dosiervorrichtung ist insbesondere zur Förderung und Dosierung von flüssiger Harnstoff-Wasser-Lösung konzipiert und eingerichtet.

Weiterhin wird ein Kraftfahrzeug beschrieben, aufweisend eine Verbrennungskraftmaschine, eine Abgasbehandlungsvorrichtung zur Reinigung der Abgase der Verbrennungskraftmaschine, einen Tank für ein flüssiges Additiv sowie eine beschriebene Dosiervorrichtung, die dazu eingerichtet ist, das flüssige Additiv aus dem Tank in die Abgasbehandlungsvorrichtung dosiert zuzuführen. Bei dem Kraftfahrzeug handelt es sich insbesondere um einen Personenkraftwagen oder Lastkraftwagen mit einem Dieselmotor als Verbrennungskraftmaschine, wobei die Abgasbehandlungsvorrichtung einen SCR-Katalysator aufweist, und Harnstoff-Wasser-Lösung (ggf. unter Zuhilfenahme eines Druckgases) stromauf des SCR-Katalysators eingedüst wird.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: eine erste Ausführungsvariante einer Dosiervorrichtung für ein flüssiges Additiv,
- Fig. 2:: eine zweite Ausführungsvariante einer Dosiervorrichtung für ein flüssiges Additiv
- Fig. 3:: eine Pumpe für eine Dosiervorrichtung,
- Fig. 4:: ein Kraftfahrzeug aufweisend eine Dosiervorrichtung, und
- Fig. 5:: ein Ablaufdiagramm des beschriebenen Verfahrens.

Gleiche Elemente in den Figuren wurden mit den gleichen Bezugszeichen versehen und daher sollen die Erläuterungen zu einzelnen Figuren auch auf gleiche Elemente in anderen Figuren übertragbar sein. Es wird darauf hingewiesen, dass die Kombination von Elementen (Bauteilen) in den Figuren nur als "zwingend zusammengehörig" anzusehen ist, wenn dies hier explizit angegeben ist oder offensichtlich eine andere Kombination technisch unmöglich ist. Vielfach sind demnach Abwandlungen auch im Rahmen der Erfindung möglich, bei denen Bauteile/Funktionen aus einer Figur in andere Ausführungsvarianten (alternativ und/oder kumulativ) integriert werden.

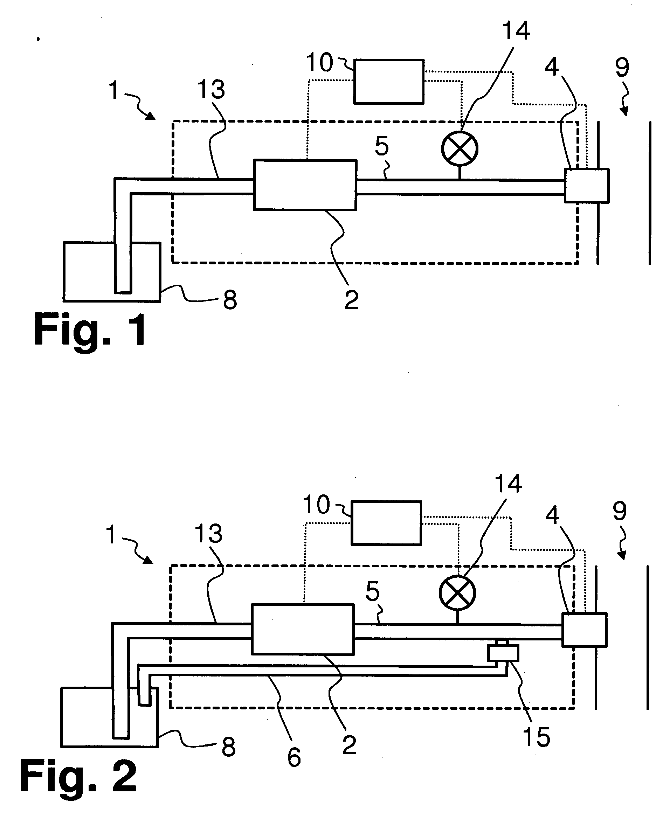

In den Fig. 1, 2 sind jeweils verschiedene Ausführungsvarianten von Dosiervorrichtungen 1 dargestellt, welche mit Hilfe des beschriebenen Verfahrens betrieben werden können. Die Dosiervorrichtungen 1 entnehmen jeweils flüssiges Additiv (insbesondere Harnstoff-Wasser-Lösung) aus einem Tank und führen es einer Abgasbehandlungsvorrichtung 9 zu. Die Dosiervorrichtungen 1 weisen jeweils eine Pumpe 2 auf, welche mit einer Saugleitung 13 an den Tank 8 angeschlossen ist. Die Pumpe 2 ist außerdem mit einer Druckleitung 5 an einen Injektor 4 angeschlossen, welcher dazu eingerichtet ist, das flüssige Additiv dosiert zu der Abgasbehandlungsvorrichtung 9 zuzuführen. An die Saugleitung 13 grenzt ein Drucksensor 14, mit dem der Druck in der Saugleitung 13 ermittelt bzw. überwacht werden kann. Die Pumpe 2, der Drucksensor 14 und der Injektor 4 sind an ein Steuergerät 10 angeschlossen, mit dem der Betrieb der Dosiervorrichtung 1 gesteuert bzw. kontrolliert werden kann.

Die Ausführungsvariante einer Dosiervorrichtung gemäß Fig. 2 weist zusätzlich eine Rücklaufleitung 6 auf, welche von der Druckleitung 5 abzweigt und über welche eine Entgasung/Entlüftung der Dosiervorrichtung 1 erfolgen kann. Die Rücklaufleitung 6 weist ein Rücklaufventil 15 auf, mit dem die Rücklaufleitung 6 geöffnet und geschlossen werden kann.

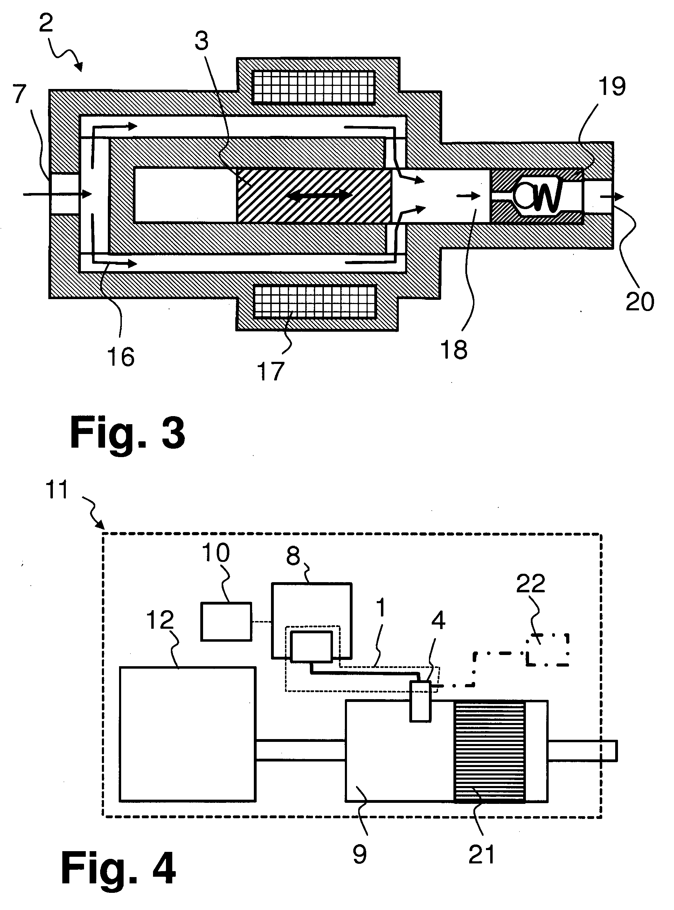

Fig. 3 zeigt eine Pumpe 2. Die Pumpe hat ein bewegliches Pumpenelement 3, welches eine mit einem Pfeil angedeutete Bewegung in Form von Förderbewegungen durchführen kann. Bei den Förderbewegungen wird das Volumen einer Pumpenkammer 18 vergrößert und verkleinert. Während das Pumpenkammervolumen sich vergrößert, strömt flüssiges Additiv gemäß dem Strömungsweg 16 von einer Saugseite 7 der Pumpe in die Pumpenkammer 18 ein. Während sich das Pumpenkammervolumen verkleinert, strömt flüssiges Additiv durch das Ventil 19 in Richtung der Druckseite 20 der Pumpe aus. Das bewegliche Pumpenelement 3 wird von einem Antrieb 17 angetrieben, welcher vorzugsweise als elektromagnetischer Linearantrieb ausgeführt ist.

Fig. 4 zeigt ein Kraftfahrzeug 11, aufweisend eine Verbrennungskraftmaschine 12 und eine Abgasbehandlungsvorrichtung 9 zur Reinigung der Abgase der Verbrennungskraftmaschine 12. In die Abgasbehandlungsvorrichtung 9 ist ein flüssiges Additiv über eine Dosiervorrichtung 1 zuführbar. Die Dosiervorrichtung 1 weist einen Injektor 4 auf, welcher die Dosierung des flüssigen Additivs (insbesondere Harnstoff-Wasser-Lösung stromauf eines SCR-Katalysators 21) in die Abgasbehandlungsvorrichtung 9 steuert. Die Dosiervorrichtung 1 übernimmt flüssiges Additiv aus dem Tank 8 und wird von einem Steuergerät kontrolliert. Gegebenenfalls kann - wie hier gestrichelt angedeutet - auch ein Druckluftsystem 22 vorgesehen sein, mit dem die Eindüsung von Additiv unterstützt wird, wie es dem Fachmann auf diesem Gebiet bekannt ist.

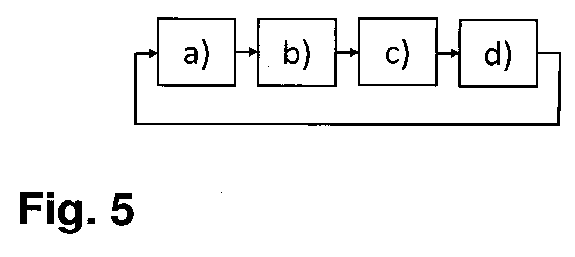

Fig. 5 zeigt ein Ablaufdiagramm des beschriebenen Verfahrens. Zu erkennen sind die Verfahrensschritte a) bis d), welche beim Betrieb des beschriebenen Verfahrens nach Art einer Schleife regelmäßig wiederholt ausgeführt werden.

Durch das beschriebene Verfahren wird ein besonders genauer und besonders zuverlässiger Betrieb einer Dosiervorrichtung möglich, welche aus besonders kostengünstigen einzelnen Komponenten aufgebaut sein kann, weil eine besonders vorteilhafte Kontrolle der verschiedenen Komponenten miteinander ermöglicht wird.

### Bezugszeichenliste

- 1: Dosiervorrichtung
- 2: Pumpe
- 3: bewegliches Pumpenelement
- 4: Injektor
- 5: Druckleitung
- 6: Rücklaufleitung
- 7: Saugseite
- 8: Tank
- 9: Abgasbehandlungsvorrichtung
- 10: Steuergerät
- 11: Kraftfahrzeug
- 12: Verbrennungskraftmaschine
- 13: Saugleitung
- 14: Drucksensor
- 15: Rücklaufventil
- 16: Strömungsweg
- 17: Antrieb
- 18: Pumpenkammer
- 19: Ventil
- 20: Druckseite
- 21: SCR-Katalysator
- 22: Druckluftsystem

## Patentansprüche

1. Verfahren zum Betrieb einer Dosiervorrichtung (1) für ein flüssiges Additiv mit zumindest einer Pumpe (2) mit einem beweglichen Pumpenelement (3), welches zur Förderung des flüssigen Additivs Förderbewegungen ausführt, und mit zumindest einem Injektor (4), der mit einer Druckleitung (5) an eine Druckseite (20) der Pumpe (2) angeschlossen ist und zur Dosierung des flüssigen Additivs geöffnet werden kann, wobei das Verfahren zumindest folgende Schritte umfasst:
a) Öffnen des Injektors (4);
b) Dosieren von flüssigem Additiv und Zählen der Förderbewegungen während des Dosierens;
c) Schließen des Injektors (4); und
d) Vergleichen der Anzahl der Förderbewegungen, die in Schritt b) ermittelt wurde, mit der Öffnungszeit des Injektors (4) zwischen Schritt a) und Schritt c) zur Diagnose des Betriebs der Dosiervorrichtung (1).

2. Verfahren nach Patentanspruch 1, wobei die Verfahrensschritte a) bis c) mit einer Wiederholungsanzahl wiederholt werden bevor Schritt d) ausgeführt wird, wobei in Schritt d) eine Anzahl von Vergleichen durchgeführt wird, die der Wiederholungsanzahl entspricht und wobei die Vergleiche zur Diagnose des Betriebs der Dosiervorrichtung (1) zusammen berücksichtigt werden.

3. Verfahren nach Patentanspruch 1 oder 2, wobei in Schritt d) anhand der Anzahl der Förderbewegungen explizit eine Menge an flüssigem Additiv berechnet wird, die zwischen Schritt a) und Schritt c) gefördert wurde.

4. Verfahren nach einem der vorhergehenden Patentansprüche, wobei in Schritt d) festgestellt wird, dass Gas in der Dosiervorrichtung (1) vorliegt, wenn die Anzahl der Förderbewegungen oder ein der Anzahl der Förderbewegungen entsprechender Parameter größer ist als ein erster Grenzwert.

5. Verfahren nach Patentanspruch 4, wobei der erste Grenzwert in Abhängigkeit der Öffnungszeit des Injektors (4) festgelegt wird.

6. Verfahren nach einem der Patentansprüche 4 oder 5, wobei eine Gasmenge in der Dosiervorrichtung (1) anhand der Anzahl der Förderbewegungen bestimmt wird.

7. Verfahren nach einem der Patentansprüche 4 bis 6, wobei eine Entgasung der Dosiervorrichtung (1) erfolgt, wenn Luft in der Dosiervorrichtung (1) festgestellt wurde.

8. Verfahren nach Patentanspruch 6, wobei die Dosiervorrichtung (1) eine Druckleitung (5) aufweist, welche sich von der Pumpe (2) zu dem Injektor (4) erstreckt, und eine Rücklaufleitung (6), die von der Druckleitung (5) abzweigt, wobei die Entgasung über die Rücklaufleitung (6) erfolgt, wenn die Anzahl der Förderbewegungen größer ist als ein zweiter Grenzwert und ansonsten eine Entgasung über den Injektor (4) erfolgt.

9. Verfahren nach einem der vorhergehenden Patentansprüche, wobei während Schritt b) eine Geschwindigkeit des beweglichen Pumpenelementes (3) ermittelt wird, und die Geschwindigkeit des beweglichen Pumpenelements (3) in einem Schritt e) zur Bestimmung eines Drucks in der Dosiervorrichtung (1) verwendet wird.

10. Dosiervorrichtung (1) zur Förderung eines flüssigen Additivs aus einem Tank (8) in eine Abgasbehandlungsvorrichtung (9), aufweisend zumindest eine Pumpe (2) mit einem beweglichen Pumpenelement (3), welches zur Förderung des flüssigen Additivs Förderbewegungen ausführt, und zumindest einen Injektor (4), der mit einer Druckleitung (5) an eine Druckseite (20) der Pumpe (2) angeschlossen ist und der zur Dosierung des flüssigen Additivs geöffnet werden kann, sowie ein Steuergerät (10), welches zur Durchführung eines Verfahrens nach einem der vorhergehenden Patentansprüche eingerichtet ist.

11. Kraftfahrzeug (11), aufweisend eine Verbrennungskraftmaschine (12), eine Abgasbehandlungsvorrichtung (9) zur Reinigung der Abgase der Verbrennungskraftmaschine (12), einen Tank (8) für ein flüssiges Additiv sowie eine Dosiervorrichtung (1) nach Patentanspruch 10, die dazu eingerichtet ist, das flüssige Additiv aus dem Tank (8) in die Abgasbehandlungsvorrichtung (9) dosiert zuzuführen.

## Claims

1. Method for operating a metering device (1) for a liquid additive, having at least one pump (2) with a movable pump element (3), which performs delivery movements in order to pump the liquid additive, and having at least one injector (4), which is connected to a pressure side (20) of the pump (2) by a pressure line (5) and which can be opened in order to meter the liquid additive, wherein the method comprises at least the following steps:
a) opening the injector (4);
b) metering liquid additive and counting the delivery movements during the metering process;
c) closing the injector (4); and
d) comparing the number of the delivery movements ascertained in step b) with the opening time of the injector (4) between step a) and step c) in order to diagnose the operation of the metering device (1).

2. Method according to Patent Claim 1, wherein method steps a) to c) are repeated with a number of repetitions before step d) is performed, wherein a number of comparisons corresponding to the number of repetitions is performed in step d) and wherein the comparisons are taken into account jointly in order to diagnose the operation of the metering device (1).

3. Method according to Patent Claim 1 or 2, wherein a quantity of liquid additive delivered between step a) and step c) is calculated explicitly in step d), using the number of delivery movements.

4. Method according to one of the preceding patent claims, wherein it is established in step d) that there is gas in the metering device (1) if the number of delivery movements or a parameter corresponding to the number of delivery movements is greater than a first limiting value.

5. Method according to Patent Claim 4, wherein the first limiting value is defined in accordance with the opening time of the injector (4).

6. Method according to one of Patent Claims 4 or 5, wherein a gas quantity in the metering device (1) is determined using the number of delivery movements.

7. Method according to one of Patent Claims 4 to 6, wherein degasification of the metering device (1) is carried out if air has been detected in the metering device (1).

8. Method according to Patent Claim 6, wherein the metering device has a pressure line (5), which extends from the pump (2) to the injector (4), and a return line (6), which branches off from the pressure line (5), wherein degasification takes place via the return line (6) when the number of delivery movements is greater than a second limiting value and, otherwise, degasification takes place via the injector (4).

9. Method according to one of the preceding patent claims, wherein a speed of the movable pump element (3) is determined in step b), and the speed of the movable pump element (3) is used in a step e) to determine a pressure in the metering device (1).

10. Metering device (1) for pumping a liquid additive out of a tank (8) into an exhaust gas treatment device (9), having at least one pump (2) with a movable pump element (3), which performs delivery movements in order to pump the liquid additive, and having at least one injector (4), which is connected to a pressure side (20) of the pump (2) by a pressure line (5) and which can be opened in order to meter the liquid additive, and having a control unit (10), which is set up to carry out a method according to one of the preceding patent claims.

11. Motor vehicle (11), having a combustion engine (12), an exhaust gas treatment device (9) for cleaning the exhaust gases of the combustion engine (12), a tank (8) for a liquid additive and a metering device (1) according to Patent Claim 10, which is set up to feed the liquid additive in a metered manner out of the tank (8) into the exhaust gas treatment device (9).

## Revendications

1. Procédé d'utilisation d'un ensemble de dosage (1) d'un additif liquide qui présente
au moins une pompe (2) dotée d'un élément mobile de pompe (3) qui exécute des déplacements de transport pour transporter l'additif liquide et
au moins un injecteur (4) raccordé à un conduit sous pression (5) sur le côté de refoulement (20) de la pompe (2) et qui peut être ouvert pour doser l'additif liquide, le procédé comportant au moins les étapes suivantes :
a) ouverture de l'injecteur (4),
b) dosage de l'additif liquide et comptage des déplacements de transport pendant le dosage,
c) fermeture de l'injecteur (4) et
d) comparaison entre le nombre de déplacements de transport qui a été déterminé à l'étape b) et la durée d'ouverture de l'injecteur (4) entre l'étape a) et l'étape c) en vue de former un diagnostic du fonctionnement de l'ensemble de dosage (1).

2. Procédé selon la revendication 1, dans lequel les étapes a) à c) sont répétées un certain nombre de fois avant l'exécution de l'étape d), plusieurs comparaisons qui correspondent au nombre de répétitions étant réalisées à l'étape d) et les comparaisons étant prises en compte ensemble pour former le diagnostic du fonctionnement de l'ensemble de dosage (1).

3. Procédé selon les revendications 1 ou 2, dans lequel la quantité d'additif liquide qui a été transportée entre l'étape a) et l'étape c) est calculée explicitement à l'étape d) à l'aide du nombre de déplacements de transport.

4. Procédé selon l'une des revendications précédentes, dans lequel à l'étape d), on conclut que du gaz est présent dans l'ensemble de dosage (1) si le nombre de déplacements de transport ou un paramètre qui correspond au nombre des déplacements de transport est supérieur à une première valeur limite.

5. Procédé selon la revendication 4, dans lequel la première valeur limite est définie en fonction de la durée d'ouverture de l'injecteur (4).

6. Procédé selon l'une des revendications 4 ou 5, dans lequel la quantité de liquide présente dans l'ensemble de dosage (1) est déterminée à l'aide du nombre de déplacements de transport.

7. Procédé selon l'une des revendications 4 à 6, dans lequel un dégazage de l'ensemble de dosage (1) a lieu si la présence d'air dans l'ensemble de dosage (1) a été constatée.

8. Procédé selon la revendication 6, dans lequel l'ensemble de dosage (1) présente un conduit sous pression (5) qui s'étend de la pompe (2) à l'injecteur (4) et un conduit de renvoi (6) qui part du conduit sous pression (5), le dégazage s'effectuant par le conduit de renvoi (6) lorsque le nombre de déplacements de transport est supérieur à une deuxième valeur limite, le dégazage a lieu sinon par l'intermédiaire de l'injecteur (4).

9. Procédé selon l'une des revendications précédentes, dans lequel la vitesse de l'élément mobile de pompe (3) est déterminée à l'étape b) et la vitesse de l'élément mobile de pompe (3) est utilisée dans une étape e) pour déterminer la pression qui règne dans l'ensemble de dosage (1).

10. Ensemble de dosage (1) destiné à transporter un additif liquide depuis une cuve (8) jusque dans un ensemble (9) de traitement de gaz d'échappement, l'ensemble présentant au moins une pompe (2) dotée d'un élément mobile de pompe (3) qui exécute des déplacements de transport pour transporter l'additif liquide et au moins un injecteur (4) raccordé au conduit sous pression (5) situé sur un côté de refoulement (20) de la pompe (2) et qui peut être ouvert pour doser l'additif liquide, ainsi qu'un appareil de commande (10) conçu pour mettre en oeuvre un procédé selon l'une des revendications précédentes.

11. Véhicule automobile (11) présentant un moteur (12) à combustion interne, un ensemble (9) de traitement des gaz d'échappement qui épure les gaz d'échappement du moteur (12) à combustion interne, une cuve (8) à additif liquide ainsi qu'un ensemble de dosage (1) selon la revendication 10, conçu pour amener de manière dosée l'additif liquide depuis la cuve (8) jusque dans l'ensemble (9) de traitement des gaz d'échappement.
